# FASCICULE DE BREVET EUROPEEN

(11) **EP 1 505 264 B1**
(45) Date de publication et mention de la délivrance du brevet: **23.08.2006**
(21) Numéro de dépôt: 04291512.4
(22) Date de dépôt: 16.06.2004
(51) Int. Cl.: F01D 25/16

(54) **Turbine basse-pression de turbomachine**
Niederdruck-Turbine einer Turbomaschine
Low pressure turbine of a turbomachine

(30) Priorité: 05.08.2003 FR 0309642
(43) Date de publication de la demande: 09.02.2005
(73) Titulaire: SNECMA, 75015 Paris (FR)
(72) Inventeur: Bart, Jacques, 91370 Verrieres-le-Buisson (FR); Beutin, Bruno, 91000 Evry (FR); Bouiller, Philippe, 77210 Samoreau (FR)
(74) Mandataire: Boura, Olivier

(56) Documents cités:
- FR-A- 2 633 023
- US-A- 3 844 110
- US-A- 5 074 109

## Description

### Arrière-plan de l'invention

La présente invention se rapporte au domaine général des turbines basse-pression de turbomachines aéronautiques. Elle vise plus particulièrement un assemblage particulier du rotor de la turbine basse-pression sur l'arbre basse-pression qui permet d'en faciliter le montage et le démontage.

Une turbomachine aéronautique est typiquement munie d'une turbine haute-pression disposée en sortie d'une chambre de combustion. Une turbine basse-pression est disposée en aval de la turbine haute-pression, dans le sens d'écoulement du flux gazeux issu de la chambre de combustion. Un carter d'échappement du flux gazeux est assemblé en aval de la turbine basse-pression. Ainsi, les gaz issus de la chambre de combustion traversent les turbines haute et basse pression pour les entraîner en rotation et sont évacués au niveau du carter d'échappement.

La turbine basse-pression de la turbomachine se compose essentiellement d'un rotor (aubes et disques) monté sur un tourillon basse-pression. Ce tourillon est assemblé sur un arbre basse-pression de la turbomachine par l'intermédiaire d'un système de cannelures qui permet d'entraîner en rotation l'arbre basse-pression. De même, la turbine haute-pression comporte un rotor (aubes et disques) monté sur un tourillon haute-pression. Un palier à roulement disposé sur le tourillon basse-pression permet de supporter en rotation le tourillon haute-pression par rapport à l'arbre basse-pression.

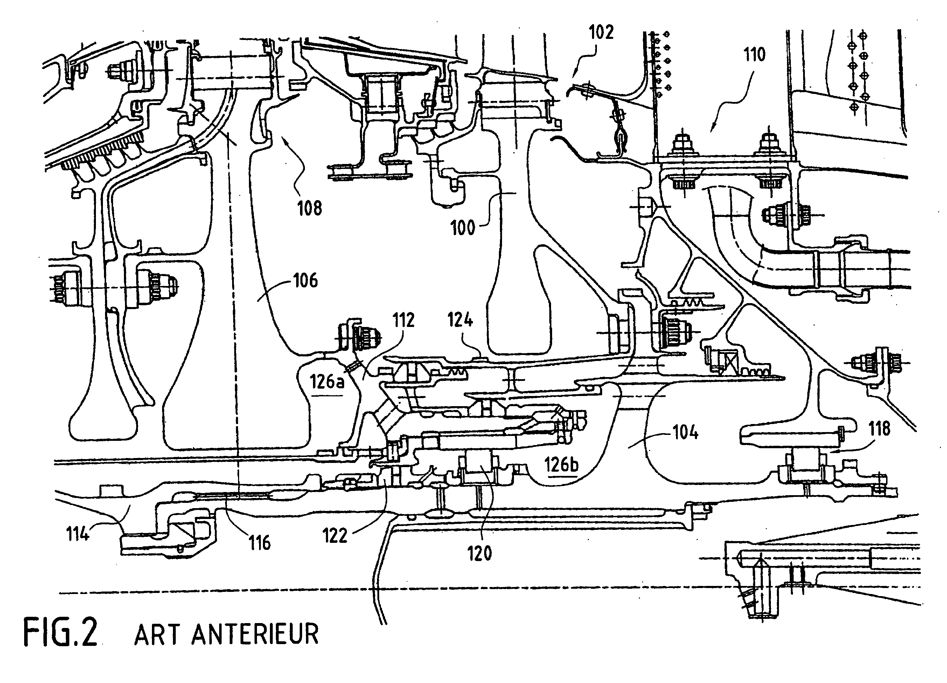

La figure 2 illustre partiellement un assemblage connu du rotor d'une turbine basse-pression sur l'arbre basse-pression d'une turbomachine. Sur cette figure, le rotor 100 de la turbine basse-pression 102 est fixé sur un tourillon basse-pression 104. Ce tourillon basse-pression 104 s'étend axialement, d'une part vers l'amont jusqu'au niveau d'un rotor 106 de la turbine haute-pression 108, et d'autre part vers l'aval jusqu'au niveau d'un carter d'échappement 110 de la turbomachine. Le rotor 106 de la turbine haute-pression 108 est quant à lui fixé sur un tourillon haute-pression 112 s'étendant axialement vers le tourillon basse-pression 104.

La turbine basse-pression 102 entraîne en rotation un arbre basse-pression 114 par l'intermédiaire de cannelures 116 prévues à l'extrémité amont du tourillon basse-pression 104. Un premier palier à roulement 118 est monté sur l'extrémité aval du tourillon basse-pression 104 afin de garantir un appui et un centrage de la turbine basse-pression 102 par rapport au carter d'échappement 110 de la turbomachine. Un second palier à roulement 120 est également monté sur le tourillon basse-pression 104 afin de supporter en rotation le tourillon haute-pression 112. Ce second palier est disposé entre le premier palier 118 et les cannelures 116. Par ailleurs, un joint d'étanchéité 122 est monté sur le tourillon basse-pression 104, entre le second palier 120 et les cannelures 116. Associé à un flasque 124, ce joint permet d'assurer une étanchéité entre une enceinte à air 126a et une enceinte à huile 126b.

Un tel assemblage de la turbine basse-pression présente de nombreux inconvénients, notamment lors du démontage de la turbine basse-pression.

Au cours d'une opération de démontage (partiel ou complet) d'une turbomachine, par exemple pendant les phases de maintenance de celle-ci, les différents éléments sont typiquement démontés par l'arrière de la turbomachine, c'est à dire de l'amont vers l'aval. En l'espèce, lorsqu'il s'agit de démonter la turbine basse-pression, il est notamment nécessaire de procéder d'abord au démontage du carter d'échappement. La turbine basse-pression (tourillon et rotor) est alors à son tour retirée par translation axiale vers l'aval de la turbomachine.

Dans le cas de l'assemblage illustré par la figure 2, une fois le carter d'échappement 110 retiré, le démontage de la turbine basse-pression 102 engendre des problèmes. En effet, lorsque le tourillon basse-pression 104 est coulissé axialement vers l'aval, le second palier 120 et le joint d'étanchéité 122, supportés par le tourillon basse-pression, se désengagent du tourillon haute-pression 112.

Le retrait du second palier à roulement 120 entraîne alors un décentrage de l'arbre basse-pression 114 par rapport au tourillon haute-pression 112 (et donc par rapport à la turbine haute-pression 108), de sorte que l'arbre basse-pression 114 n'est plus maintenu radialement après le démontage de la turbine basse-pression 102. En outre, le retrait du joint 122 a pour effet de rompre l'étanchéité entre l'enceinte à air 126a et l'enceinte à huile 126b de sorte que de l'huile se répand dans l'enceinte à air entraînant des risques de fuite d'huile.

Une turbine basse-pression selon l'art antérieur est connue dans le document FR 2633023.

### Objet et résumé de l'invention

La présente invention vise donc à pallier de tels inconvénients en proposant une nouvelle géométrie de turbine basse-pression de turbomachine qui permet de simplifier son démontage en évitant que la turbine haute-pression ne se trouve décentrée par rapport à l'arbre de turbine basse-pression et que l'étanchéité entre les enceintes à huile et à air ne se trouve rompue.

A cet effet, il est prévu une turbine basse-pression d'une turbomachine, la turbomachine comportant une turbine haute-pression disposée en amont de la turbine basse-pression dans le sens d'écoulement d'un flux gazeux la traversant et un carter d'échappement disposé en aval de la turbine basse-pression dans le sens d'écoulement du flux gazeux, la turbine basse-pression comportant un rotor fixé sur un tourillon basse-pression et un arbre basse-pression de rotation, caractérisée en ce que la turbine basse-pression comporte en outre un premier palier à roulement disposé sur l'arbre basse-pression et supportant un tourillon haute-pression sur lequel est fixé un rotor de la turbine haute-pression, un second palier à roulement disposé sur le tourillon basse-pression en aval du premier palier à roulement et permettant de centrer le tourillon basse-pression par rapport au carter d'échappement, et un système de cannelures pour l'entraînement de l'arbre basse-pression par le tourillon basse-pression, le système de cannelures étant disposé entre les premier et second paliers à roulement.

Le premier palier à roulement étant disposé sur l'arbre basse-pression, il n'est pas désengagé du tourillon haute-pression lors du démontage du tourillon basse-pression. De la sorte, lors du démontage de la turbine basse-pression, le tourillon haute-pression est toujours supportée par le premier palier à roulement ce qui permet à l'arbre basse-pression de rester centré par rapport à la turbine haute-pression. L'arbre basse-pression est ainsi toujours maintenu radialement.

Selon une caractéristique avantageuse de l'invention, la turbine basse-pression comporte en outre un joint d'étanchéité avec le tourillon haute-pression, ce joint d'étanchéité étant disposé sur l'arbre basse-pression, en amont du premier palier à roulement.

Ainsi, le joint d'étanchéité étant également disposé sur l'arbre basse-pression de la turbine, il n'est pas non plus désengagé du tourillon haute-pression lors du démontage du tourillon basse-pression. De la sorte, lors du démontage de la turbine basse-pression, le joint n'est pas retiré et l'étanchéité entre les enceintes à air et à huile n'est donc pas rompue.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe longitudinale et partielle d'une turbine basse-pression selon l'invention ; et
- la figure 2 est une vue en coupe longitudinale et partielle d'une turbine basse-pression de l'art antérieur.

### Description détaillée d'un mode de réalisation

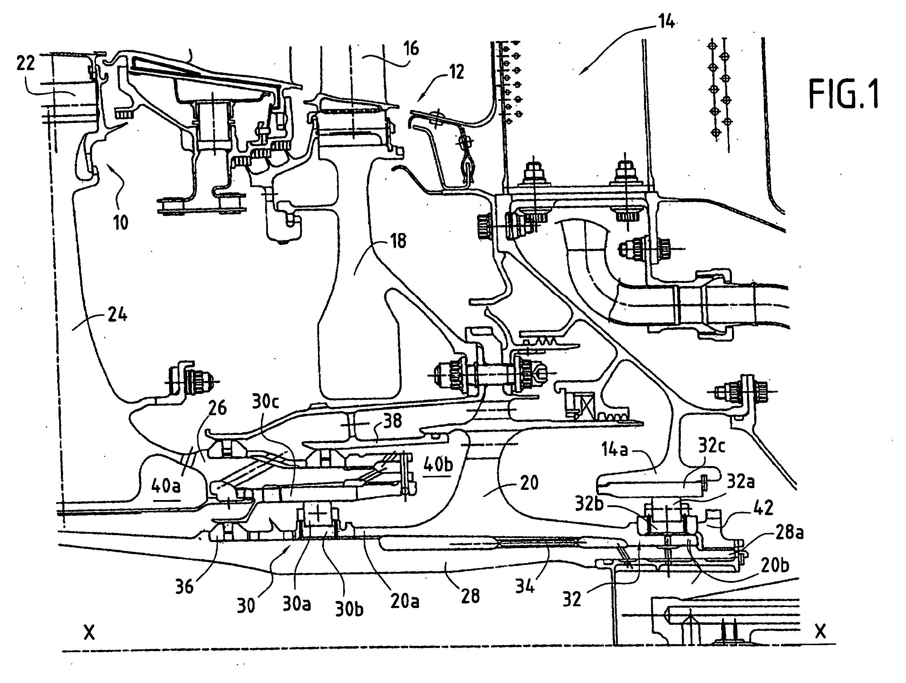

Sur la figure 1, on a représenté partiellement une turbine basse-pression de turbomachine selon l'invention. La turbomachine représentée est équipée d'un système de réchauffe (de type post-combustion). Toutefois, la présente invention pourrait également s'appliquer aux turbomachines sans système de réchauffe.

De manière générale, et de façon connue en soi, la turbomachine d'axe longitudinal X-X comporte notamment une turbine haute-pression 10 disposée en sortie d'une chambre de combustion (non représentée). Une turbine basse-pression 12 est disposée en aval de la turbine haute-pression 10 dans le sens d'écoulement du flux gazeux issu de la chambre de combustion. La turbomachine comporte également un carter d'échappement 14 aménagé en aval de la turbine basse-pression 12.

La turbine basse-pression 12 se compose essentiellement d'une pluralité d'aubes mobiles 16 montées sur un disque 18. Les aubes mobiles 16 et le disque 18 forment ainsi le rotor de la turbine basse-pression. Le disque 18 de la turbine basse-pression est quant à lui fixé sur un tourillon basse-pression 20 destiné à entraîner en rotation le rotor de la turbine.

De manière similaire, la turbine haute-pression 10 comporte une pluralité d'aubes mobiles 22 montées sur un disque 24. Ce dernier est fixé sur un tourillon haute-pression 26 qui s'étend selon l'axe longitudinal X-X de la turbomachine depuis une extrémité inférieure du disque 24 de la turbine haute-pression jusqu'au niveau du disque 18 de la turbine basse-pression.

Le rotor de la turbine basse-pression 12 entraîne en rotation un arbre longitudinal basse-pression 28 dont l'extrémité aval 28a s'étend axialement jusqu'au niveau du carter d'échappement 14. Quant au rotor de la turbine haute-pression 10, celui-ci entraîne en rotation un arbre haute-pression (non représenté sur la figure) qui est concentrique à l'arbre basse-pression 28.

Selon l'invention, un premier palier à roulement inter-arbres 30 est monté sur l'arbre basse-pression 28 pour supporter en rotation le tourillon haute-pression 26. Plus précisément, ce premier palier à roulement 30 est disposé sur l'arbre basse-pression contre une extrémité amont 20a du tourillon basse-pression 20.

Classiquement, le premier palier 30 se compose d'une pluralité de rouleaux 30a engagés entre une bague intérieure 30b montée sur l'arbre basse-pression 28 et une bague extérieure 30c solidaire du tourillon haute-pression 26. De l'huile peut être injectée entre les bagues intérieure et extérieure afin de lubrifier et refroidir le palier.

Il est également prévu de monter un second palier à roulement 32 sur l'extrémité aval 20b du tourillon basse-pression 20. Ce second palier 32 permet de garantir un appui et de centrer le tourillon basse-pression 20 par rapport au carter d'échappement 14.

De même que pour le premier palier 30, le second palier à roulement 32 comporte une pluralité de rouleaux 32a engagés entre bague intérieure 32b montée sur l'extrémité aval 20b du tourillon basse-pression 20 et une bague extérieure 32c solidaire d'une bride 14a fixée sur le carter d'échappement 14. De d'huile de lubrification et de refroidissement peut également être injectée entre les bagues intérieure et extérieure du palier.

Par ailleurs, la turbine basse-pression 12 comporte un système de cannelures 34 pour l'entraînement de l'arbre basse-pression 28 par le rotor basse-pression. Par exemple, ce système est formé de cannelures complémentaires qui sont pratiquées sur l'arbre basse-pression 28 et sur le tourillon basse-pression 20. Ces cannelures sont disposées axialement entre le premier palier à roulement 30 et le second palier à roulement 32.

Selon une caractéristique avantageuse de l'invention, la turbine basse-pression 12 comporte en outre un joint d'étanchéité 36 avec le tourillon haute-pression 26, ce joint d'étanchéité étant disposé sur l'arbre basse-pression 28, en amont du premier palier à roulement 30. Le joint d'étanchéité 36 peut par exemple être réalisé en carbone.

Associé à un flasque 38 disposé longitudinalement entre les tourillons haute 26 et basse pression 20, ce joint d'étanchéité 36 permet ainsi d'assurer une étanchéité entre une enceinte amont à air 40a et une enceinte aval à huile 40b de la turbomachine.

L'ensemble composé du joint d'étanchéité 36, du premier palier à roulement 30, du tourillon basse-pression 20 et du second palier à roulement 32 est maintenu bloqué longitudinalement sur l'arbre basse-pression 28 par l'intermédiaire d'un écrou 42 serré à l'extrémité aval 28a de l'arbre basse-pression.

On expliquera maintenant la manière dont la turbine basse-pression ainsi décrite est démontée, par exemple au cours d'opérations de maintenance à effectuer sur le rotor basse-pression. Cette opération de démontage s'effectue d'amont vers l'aval de la turbomachine.

Dans un premier temps, le carter d'échappement 14 est démonté en le faisant coulisser longitudinalement vers l'aval jusqu'à le retirer de la turbomachine. Ensuite, l'écrou 42 serré à l'extrémité aval 28a de l'arbre basse-pression 28 est retiré et le second palier à roulement 32 est désengagé du tourillon basse-pression 20. Une fois ces éléments retirés, la turbine basse-pression 12 peut alors être retirée. Cette opération s'effectue en translatant longitudinalement vers l'aval le tourillon basse-pression 20 sur lequel le rotor basse-pression (aubes mobiles 16 et disque 18) est fixé.

Le premier palier à roulement 30 étant monté sur l'arbre basse-pression 28 en amont du tourillon basse-pression 20, celui-ci n'est pas désengagé de l'arbre basse-pression et du tourillon haute-pression 26. Il en résulte que le tourillon haute-pression 26 reste supporté par le premier palier à roulement et qu'ainsi, l'arbre basse-pression 28 reste centré par rapport à la turbine haute-pression 10 lors du démontage de la turbine basse-pression. Le démontage de la turbine basse-pression se trouve donc simplifié.

De même, le joint d'étanchéité 36 étant monté sur l'arbre basse-pression 28 en amont du premier palier à roulement 30 (et donc du tourillon basse-pression 20), celui-ci n'est pas non plus désengagé de l'arbre basse-pression 28 et du tourillon haute-pression 26, et peut donc toujours jouer son rôle d'étanchéité. Ainsi, on évite que l'huile provenant de l'enceinte à huile 40b ne se répande dans l'enceinte à air 40a lors du démontage de la turbine basse-pression.

En plus de faciliter le démontage de la turbine basse-pression, la présente invention permet, pour les mêmes raisons, de simplifier le montage de la turbine basse-pression (par exemple, après les opérations de maintenance sur le rotor).

En effet, l'arbre basse-pression 28 étant déjà centré sur la turbine haute-pression 10 (et donc maintenu radialement), il est alors beaucoup plus simple de procéder au montage de la turbine basse-pression 12 sans avoir à intervenir sur les éléments de la turbine haute-pression. Pour cette opération, on met la turbine basse-pression 12 dans l'alignement de la turbine haute-pression 10 à une certaine distance de celle-ci et on procède à l'accostage de la turbine sur l'arbre basse-pression 28 de telle manière que les cannelures 34 de la turbine soient correctement engagées dans les cannelures complémentaires 34 de l'arbre basse-pression. On translate alors longitudinalement la turbine basse-pression 12 vers la turbine haute-pression 10 jusqu'à ce que l'extrémité amont 20a du tourillon basse-pression 20 soit en butée contre la bague intérieure 30b du premier palier à roulement 30. Les rouleaux 32a du second palier à roulement 32 se trouvent ainsi correctement engagées dans la bague extérieure 32c solidaire de la bride 14a du carter d'échappement 14 et l'ensemble est bloqué par l'écrou 42.

La simplification du montage et du démontage de la turbine basse-pression selon l'invention se traduit notamment par des diminutions des coûts de maintenance de la turbomachine.

Enfin, par rapport une turbine basse-pression de l'art antérieur, la turbine basse-pression de la présente invention présente l'avantage de posséder une masse inférieure, ce qui permet d'alléger la masse totale de la turbomachine et de diminuer les coûts de production.

## Revendications

1. Turbine basse-pression (12) d'une turbomachine, ladite turbomachine comportant une turbine haute-pression (10) disposée en amont de la turbine basse-pression (12) dans le sens d'écoulement d'un flux gazeux la traversant et un carter d'échappement (14) disposé en aval de la turbine basse-pression (12) dans le sens d'écoulement dudit flux gazeux, ladite turbine basse-pression (12) comportant un rotor (16, 18) fixé sur un tourillon basse-pression (20) et un arbre basse-pression (28) de rotation, ladite turbine basse-pression comportant en outre un premier palier à roulement (30) supportant un tourillon haute-pression (26) sur lequel est fixé un rotor (22, 24) de la turbine haute-pression (10), un second palier à roulement (32) disposé sur ledit tourillon basse-pression (20) en aval dudit premier palier à roulement (30) et permettant de centrer ledit tourillon basse-pression (20) par rapport audit carter d'échappement (14), et un système de cannelures (34) pour l'entraînement dudit arbre basse-pression (28) par ledit tourillon basse-pression (20), **caractérisée en ce que** le premier palier à roulement (30) est disposé sur ledit arbre basse-pression et **en ce que** ledit système de cannelures (34) est disposé entre lesdits premier (30) et second paliers (32) à roulement.

2. Turbine selon la revendication 1, **caractérisée en ce qu**'elle comporte en outre un joint d'étanchéité (36) avec le tourillon haute-pression (26), ledit joint d'étanchéité (36) étant disposé sur l'arbre basse-pression (28), en amont du premier palier à roulement (30).

## Claims

1. A low-pressure turbine (12) of a turbomachine, said turbomachine comprising a high-pressure turbine (10) disposed upstream from the low-pressure turbine (12) in the flow direction of gas passing therethrough, and an exhaust casing (14) disposed downstream from the low-pressure turbine (12) in the flow direction of said gas, said low-pressure turbine (12) comprising a rotor (16, 18) fastened on a low-pressure trunnion (20), and a rotary low-pressure shaft (28), said low-pressure turbine further including a first rolling bearing (30) supporting a high-pressure trunnion (26) on which there is fastened a rotor (22, 24) of the high-pressure turbine (10), a second rolling bearing (32) disposed on said low-pressure trunnion (20) downstream from said first rolling bearing (30) and enabling said low-pressure trunnion (20) to be centred relative to said exhaust casing (14), and a system of fluting (34) enabling said low-pressure trunnion (20) to drive said low-pressure shaft (28), said low-pressure turbine being **characterised in that** the first rolling bearing (30) is disposed on said low-pressure shaft and **in that** said system of fluting (34) is disposed between said first and second rolling bearings (30, 32).

2. A turbine according to claim 1, **characterized in that** it further includes a sealing gasket (36) engaging the high-pressure trunnion (26), said sealing gasket (36) being disposed on the low-pressure shaft (28), upstream from the first rolling bearing (30).

## Patentansprüche

1. Niederdruckturbine (12) einer Turbomaschine, wobei die Turbomaschine eine Hochdruckturbine (10), die oberhalb von der Niederdruckturbine (12) gemäß der Fließrichtung eines sie durchquerenden Gasstroms angeordnet ist und ein Auslaßgehäuse (14), das stromabwärts der Niederdruckturbine (12) gemäß der Fließrichtung des Gasstroms angeordnet ist umfaßt, wobei die Niederdruckturbine (12) einen Rotor (16, 18) umfaßt, der an einem Niederdrucklagerzapfen (20) befestigt ist und eine Niederdruckrotationswelle (28), wobei die Niederdruckturbine (12) ferner ein erstes Wälzlager (30), das einen Hochdrucklagerzapfen (26) trägt, an dem ein Rotor (22, 24) der Hochdruckturbine (10) befestigt ist, ein zweites Wälzlager (32), das an dem Niederdrucklagerzapfen (20) stromabwärts des ersten Wälzlagers (30) angeordnet ist und das es ermöglicht, den Niederdrucklagerzapfen (20) in Bezug auf das Auslaßgehäuse (14) zu zentrieren, und ein Rillensystem (34) zum Antrieb der Niederdruckwelle (28) durch den Niederdrucklagerzapfen (20) umfaßt, **dadurch gekennzeichnet, daß** das erste Wälzlager (30) auf der Niederdruckwelle angeordnet ist und, daß das Rillensystem (34) zwischen den ersten (30) und zweiten (32) Wälzlagern angeordnet ist.

2. Turbine nach Anspruch 1, **dadurch gekennzeichnet, daß** sie ferner eine Dichtung (36) mit dem Hochdrucklagerzapfen (26) aufweist, wobei die Dichtung (36) auf der Niederdruckwelle (28) stromaufwärts des ersten Wälzlagers (30) angeordnet ist.
